# EUROPEAN PATENT SPECIFICATION

(11) **EP 4 362 203 B1**
(45) Date of publication and mention of the grant of the patent: **26.11.2025**
(21) Application number: 22853563.9
(22) Date of filing: 05.08.2022
(51) Int. Cl.: H01M 50/213, H01M 50/249, H01M 50/503, H01M 50/528, H01M 50/548, H01M 50/516

(54) **BUS BAR, BATTERY PACK INCLUDING THE SAME, AND ELECTRIC TWO-WHEELED VEHICLE INCLUDING THE BATTERY PACK**
SAMMELSCHIENE, BATTERIEPACK MIT DIESER SAMMELSCHIENE UND ELEKTRISCHES ZWEIRADFAHRZEUG MIT DIESEM BATTERIEPACK
BARRE OMNIBUS, BLOC-BATTERIE LA COMPRENANT, ET VÉHICULE ÉLECTRIQUE À DEUX ROUES COMPRENANT CE BLOC-BATTERIE

(30) Priority: 06.08.2021 KR 20210104185
(43) Date of publication of application: 01.05.2024
(73) Proprietor: LG Energy Solution, Ltd., Seoul 07335 (KR)
(72) Inventor: KIM, Jae-Sang, Daejeon 34122 (KR); SON, Young-Su, Daejeon 34122 (KR); LEE, Hyun-Jong, Daejeon 34122 (KR)
(74) Representative: Plasseraud IP
(86) International application number: PCT/KR2022/011700
(87) International publication number: WO 2023/014188

(56) References cited:
- EP-A1- 3 460 878
- CN-A- 108 878 757
- KR-A- 20090 003 825
- KR-A- 20180 082 802
- KR-A- 20190 122 407
- KR-A- 20190 142 581
- KR-A- 20190 142 581
- US-A1- 2019 173 072
- US-A1- 2020 176 735

## Description

### TECHNICAL FIELD

The present disclosure relates to a bus bar, a battery pack including the same, and an electric two-wheeled vehicle including the battery pack. More specifically, the present disclosure relates to a bus bar to which a bending structure capable of absorbing vibration is applied, a battery pack including the same, and an electric two-wheeled vehicle including the battery pack.

The present application claims priority to Korean Patent Application No. 10-2021-0104185 filed on August 6, 2021 in the Republic of Korea.

### BACKGROUND ART

In manufacturing a battery pack including a cylindrical battery cell, it is necessary to electrically connect a plurality of cylindrical battery cells to increase the capacity and/or output of the battery pack. In order to electrically connect the plurality of cylindrical battery cells as described above, an electrical connection component such as a bus bar may be used. In this case, electrical connection may be realized by welding the bus bar to the electrode terminal of the cylindrical battery cell.

When electrical connection is realized by welding an electrical connection component such as a bus bar to electrode terminals of a plurality of cylindrical battery cells as above, if some of the welding areas portions are damaged to break the electrical connection between some cylindrical battery cells, a defect may occur in the battery pack. That is, if some of the welding areas are damaged, the capacity reduction and/or output decrease of the battery pack may occur depending on the electrical connection type of the plurality of cylindrical battery cells constituting the battery pack, and the electric connection between the positive electrode terminal and the negative electrode terminal of the battery pack may be blocked, making it completely impossible to use the battery pack.

In particular, when the battery pack is applied to a device that is continuously exposed to high-frequency vibrations generated according to driving on a road, such as an electric two-wheeled vehicle, the risk of damage to the welding area for electrical connection increases.

Therefore, it is required to find a way to minimize the impact transmitted to the welding area even when the impact due to vibration is applied to the battery pack by improving the structure of the bus bar applied for the manufacture of the battery pack.

US2019173072A1 discloses a battery busbar. KR20180082802A discloses a battery package with improved durability.

### DISCLOSURE

### Technical Problem

The present disclosure is designed to solve the problems of the related art, and therefore the present disclosure is directed to minimizing the impact transmitted to the welding area even if the battery pack is subjected to impact due to vibration by improving the structure of the bus bar applied to the manufacture of the battery pack.

However, technical problems to be solved by the present disclosure are not limited to the above-described problems, and other problems not mentioned herein may be clearly understood by one of ordinary skill in the art from the following description of the present disclosure.

### Technical Solution

A bus bar and a battery pack including the bus bar are as defined in the attached set of claims. A battery pack according to an embodiment of the present disclosure in order to solve the above problem comprises a plurality of battery cells; a pack housing configured to accommodate the plurality of battery cells; and a bus bar having a terminal fastening unit coupled to an electrode terminal of each of the plurality of battery cells and provided to at least one side of the pack housing. The terminal fastening unit has a shape bent toward the electrode terminal from a circumference of a bus bar hole formed in the bus bar and includes at least one fastening leg coupled to the electrode terminal.

The battery cell may be a cylindrical battery cell.

The pack housing may have an opening formed at a location corresponding to the electrode terminal.

The terminal fastening unit may be provided at a location corresponding to the opening.

Four fastening legs may be provided, and the four fastening legs may be arranged to be spaced apart by the same distance from each other along the circumference of the bus bar hole.

The four fastening legs may have the same shape and size.

The bus bar hole may have a circular planar shape.

The fastening leg may include a contact portion coupled to the electrode terminal; and a connection portion configured to extend from the circumference of the bus bar hole and connected to the contact portion.

The contact portion may have at least one contact protrusion formed on a surface facing the electrode terminal.

At least a part of the connection portion may have a shape inclined upward or downward toward the electrode terminal.

The terminal fastening unit has a pair of notching portions formed to be concave toward an inner side of the bus bar hole at both sides of the fastening leg.

A partial area of the fastening leg may have a reduced width compared to the surrounding area.

The fastening leg includes a length variable region having at least one bending portion in which the extending direction is changed.

Meanwhile, a bus bar according to an embodiment of the present disclosure in order to solve the above problem is provided to at least one side of a pack housing to electrically connect a plurality of battery cells accommodated in the pack housing. **In** addition, the bus bar comprises a terminal fastening unit that has a shape bent toward an electrode terminal of the battery cell from a circumference of a bus bar hole formed in the bus bar and includes at least one fastening leg coupled to the electrode terminal.

In addition, an electric two-wheeled vehicle according to an embodiment of the present disclosure in order to solve the above problem comprises the battery pack according to an embodiment of the present disclosure as described above.

### Advantageous Effects

According to one aspect of the present disclosure, by improving the structure of the bus bar applied for the manufacture of the battery pack, it is possible to minimize the impact transmitted to the welding area even if the battery pack is subjected to an impact due to vibration.

However, the technical effects obtainable through the present disclosure are not limited to the above-described effects, and other problems not mentioned will be clearly understood by those skilled in the art from the description described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing a battery pack according to an embodiment of the present disclosure.
FIG. 2 is a partial cross-sectional view showing a coupling area between a bus bar and a battery cell applied to the battery pack shown in FIG. 1.
FIG. 3 is a perspective view showing a bus bar according to an embodiment of the present disclosure.
FIG. 4 is a partially enlarged view of the bus bar shown in FIG. 3.
FIG. 5 is a partial enlarged view showing the shape of the bus bar shown in FIG. 4 as viewed from another angle.
FIG. 6 is a partial enlarged view showing the coupling area of the bus bar and a first electrode terminal of the battery cell according to an embodiment of the present disclosure.
FIG. 7 is a partial enlarged view showing the coupling area of the bus bar and a second electrode terminal of the battery cell according to an embodiment of the present disclosure.
FIG. 8 is a partial side view of the bus bar according to an embodiment of the present disclosure.
FIG. 9 is a partial enlarged view showing the coupling area of the bus bar and the first electrode terminal of the battery cell according to another embodiment of the present disclosure.
FIG. 10 is a view showing the shape of a fastening leg provided in the bus bar according to another embodiment of the present disclosure.
FIG. 11 is a diagram showing an electric two-wheeled vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

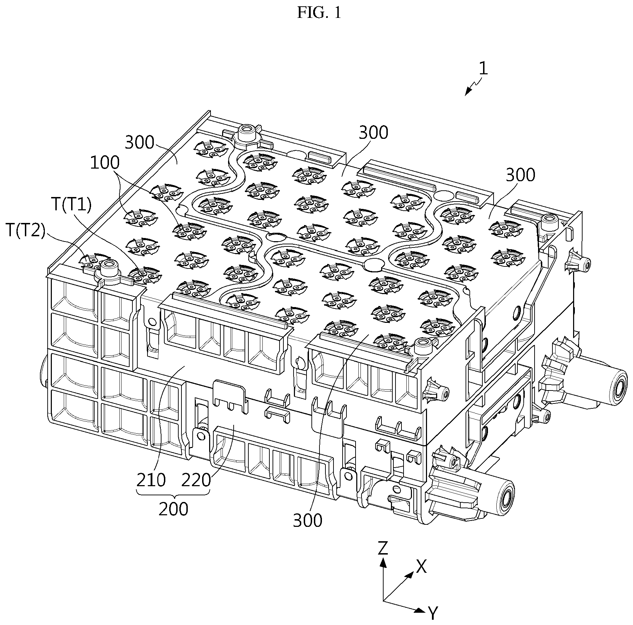

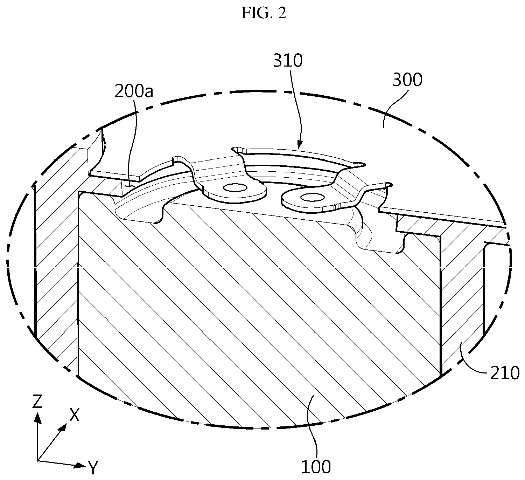

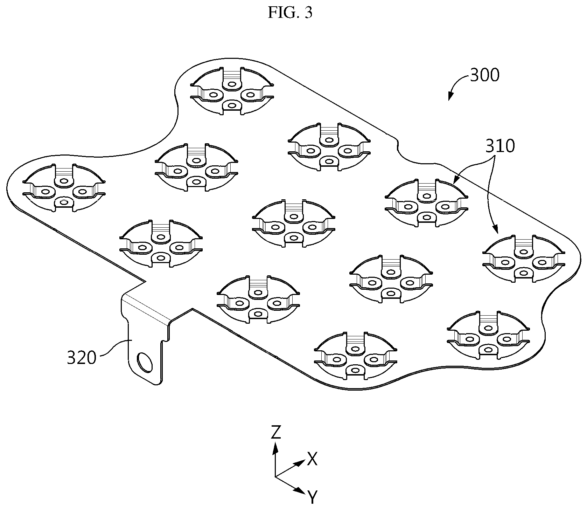

First, the overall structure of a battery pack 1 according to an embodiment of the present disclosure will be described with reference to FIGS. 1 to 3. FIG. 1 is a perspective view showing a battery pack according to an embodiment of the present disclosure, and FIG. 2 is a partial cross-sectional view showing a coupling area between a bus bar and a battery cell applied to the battery pack shown in FIG. 1. FIG. 3 is a perspective view showing a bus bar according to an embodiment of the present disclosure.

Referring to FIGS. 1 to 3, a battery pack 1 according to an embodiment of the present disclosure includes a plurality of battery cells 100, a pack housing 200, and at least one bus bar 300, 300A.

The plurality of battery cells 100 are arranged to stand side by side and are accommodated in the pack housing 200. The battery cell 100 is equipped with an electrode terminal T. In the present disclosure, as the battery cell 100, for example, a cylindrical battery cell 100 may be applied. Hereinafter, in the present disclosure, a case in which the battery cell 100 is a cylindrical battery cell will be described as an example.

When the battery cell 100 is a cylindrical battery cell, the first electrode terminal T1 and the second electrode terminal T2 are respectively provided at one side and the other side of the battery cell 100 in the longitudinal direction (parallel to the Z-axis). The plurality of battery cells 100 may be connected in series or in parallel, or a mixture of series and parallel. Accordingly, the plurality of battery cells 100 standing side by side may be arranged such that the electrode terminals T having the same polarity face the same direction. In contrast, some battery cells 100 may be arranged such that the first electrode terminals T1 face upward, and the remaining battery cells 100s may be arranged such that the second electrode terminals T2 face upward.

The pack housing 200 accommodates a cell assembly including a plurality of battery cells 100. As exemplarily shown in FIGS. 1 and 2 of the present application, the pack housing 200 may have an independent accommodation space for each of the plurality of battery cells 100. The pack housing 200 has an opening 200a formed at a location corresponding to the electrode terminal T of the battery cell 100. The opening 200a may be provided in plurality at one side of the pack housing 200 in a height direction (a direction parallel to the Z axis). Similarly, the plurality of openings 200a may be provided at the other side of the pack housing 200 in the height direction. The plurality of openings 200a may also be provided at the other side of the pack housing 200 in the height direction (parallel to the Z axis).

The pack housing 200 may include a first housing 210 and a second housing 220, as shown in FIG. 1. In this case, the first housing 210 may cover the top and sides of the cell assembly, and the second housing 220 may cover the bottom and sides of the cell assembly. When the pack housing 200 is composed of a plurality of parts as above, the process of accommodating the battery cell 100 in the pack housing 200 may be easily performed.

On the other hand, since the pack housing 200 is a part in contact with the battery cell 100 and the bus bar 300, it may be made of an injection-molded resin material having insulation in order to prevent a short circuit due to unnecessary electrical connection. However, the material of the pack housing 200 is not limited thereto, and any material having insulation and a certain level of strength or higher required according to the use of the battery pack 1 of the present disclosure is applicable.

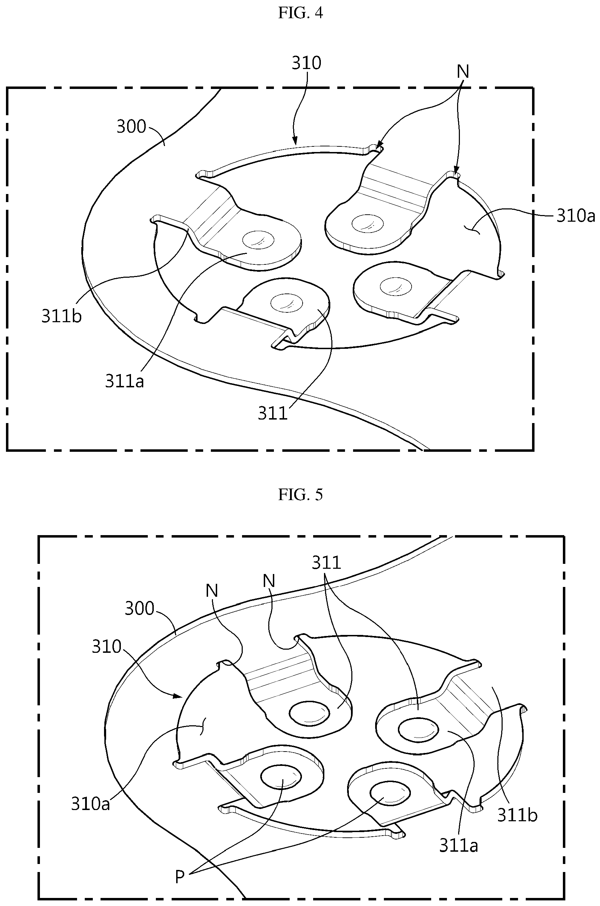

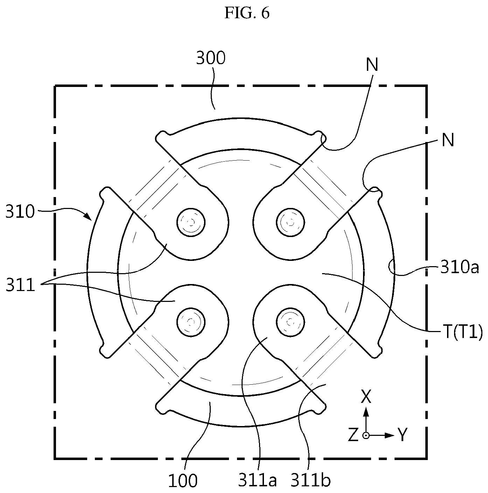

Next, a detailed structure of the bus bar 300 according to an embodiment of the present disclosure will be described with reference to FIGS. 4 to 8 along with FIGS. 1 to 3. FIG. 4 is a partially enlarged view of the bus bar shown in FIG. 3, FIG. 5 is a partial enlarged view showing the shape of the bus bar shown in FIG. 4 as viewed from another angle, and FIG. 6 is a partial enlarged view showing the coupling area of the bus bar and a first electrode terminal of the battery cell according to an embodiment of the present disclosure.

First, referring to FIGS. 1 to 3, the bus bar 300 according to an embodiment of the present disclosure is provided to at least one side of the pack housing 200 to electrically connect the plurality of battery cells 100. The number of bus bars 300 may vary according to the number of the plurality of battery cells 100 constituting the cell assembly of the present disclosure and their electrical connection form. For example, when the plurality of battery cells 100 are all connected in parallel, only one bus bar 300 may be provided to one side and the other side of the pack housing 200, respectively. On the other hand, if the plurality of battery cells 100 are electrically connected in a mixed series and parallel form, a plurality of bus bars 300 may be provided to at least one of one side and the other side of the pack housing 200. For example, a pair of bus bars 300 forming a maximum potential difference among the bus bars 300, that is, a pair of high-potential bus bars 300 may be connected to a pair of pack terminals, respectively. Thereby, the pair of pack terminals may function as a positive electrode terminal and a negative electrode terminal of the battery pack 1.

Next, referring to FIGS. 4 to 8 together with FIGS. 1 and 2, the bus bar 300 includes a terminal fastening unit 310 coupled to an electrode terminal T of each of the plurality of battery cells 100. The bus bar 300 may further include a fixing portion 320 for fastening with the pack housing 200.

For smooth fastening between the bus bar 300 and the electrode terminal T of the battery cell 100, the terminal fastening unit 310 may be provided in the same number as the openings 200a of the pack housing 200. In addition, the terminal fastening unit 310 may be provided at a location corresponding to the opening 200a of the pack housing 200. The terminal fastening unit 310 may be arranged so that its center coincides with the center of the electrode terminal T.

The terminal fastening unit 310 is bent from the circumference of the bus bar hole 310a formed in the bus bar 300 toward the electrode terminal T. The bus bar hole 310a may have, for example, a substantially circular planar shape. The terminal fastening unit 310 includes at least one fastening leg 311 coupled to the electrode terminal T.

The fastening leg 311 includes a contact portion 311a and a connection portion 311b. The contact portion 311a is coupled to the electrode terminal T of the battery cell 100. The coupling between the contact portion 311a and the electrode terminal T may be made by welding. The contact portion 311a may include at least one contact protrusion P formed on a surface facing the electrode terminal T in order to improve the contact with the electrode terminal T and secure easy welding. Due to the formation of the contact protrusion P, a side opposite to the surface facing the electrode terminal T among both surfaces of the contact portion 311a may have a concave shape in an area corresponding to the area where the contact protrusion P is formed.

The connection portion 311b extends from the circumference of the bus bar hole 310a and is connected to the contact portion 311a. At least a part of the connection portion 311b may have a shape inclined upward or downward toward the electrode terminal T. When the connection portion 311b is a connection portion 311b provided to the bus bar 300 disposed at the upper portion of the pack housing 200 (see FIGS. 1 and 2), at least a part of the connection portion 311b may be inclined downward toward the electrode terminal T. On the contrary, when the connection portion 311b is a connection portion 311b provided to the bus bar 300 disposed at the lower portion of the pack housing 200 (see FIGS. 1 and 2), at least a part of the connection portion 311b may be inclined upward toward the electrode terminal T.

In the present disclosure, the battery cell 100 may not protrude further outward than the openings 200a formed in the upper and lower portions of the pack housing 200. Therefore, in the present disclosure, the body of the bus bar 300 and the electrode terminal T of the battery cell 100 may be located at opposite sides with the top surface of the pack housing 200 therebetween. For this reason, at least a part of the connection portion 311b connecting the body of the bus bar 300 and the contact portion 311a may have a shape inclined with respect to the ground.

Because the fastening leg 311 of the present disclosure has such a structure, even if vibration and/or external impact is applied to the battery pack 1, the force caused by the vibration and/or external impact may not be entirely transmitted to the coupling area of the contact portion 311a and the electrode terminal T but be at least partially absorbed by the minute movement of the connection portion 311b.

The terminal fastening unit 310 may have a pair of notching portions N concavely formed toward the inner side of the bus bar hole 310a at both sides of the fastening leg 311. When the notching portion N is provided as described above, flexibility in the vertical direction of the connection portion 311b may be provided by partially reducing the width of the connection portion between the body of the bus bar 300 and the connection portion 311b of the fastening leg 311. Therefore, even if vibration and/or external impact is applied to the battery pack 1 of the present disclosure, the force caused by the vibration and/or external impact may not be entirely transmitted to the coupling area of the connection portion 311a and the electrode terminal T but be at least partially absorbed by the minute movement of the connection portion 311b.

On the other hand, the fastening leg 311 may be provided in plurality. When a plurality of the fastening legs 311 are provided in this way, the path of the current flowing from the electrode terminal T of the battery cell 100 to the bus bar 300 is diversified, thereby reducing the internal resistance of the battery pack 1 to create a smooth current flow.

Four fastening legs 311 may be provided, for example. In this case, the four fastening legs 311 may be disposed to be spaced apart from each other by the same distance along the circumference of the bus bar hole 310a. In addition, the four fastening legs 311 may have the same shape and size as each other. When the bus bar 300 of the present disclosure is configured in this way, the electric resistance may be reduced by diversifying the path of the current flowing from the electrode terminal T of the battery cell 100 to the bus bar 300, and at the same time, a sufficient space may be secured so that the venting gas ejected through the venting portion (not shown) formed at the first electrode terminal T1 or the second electrode terminal T2 of the battery cell 100 may be smoothly discharged to the outside of the battery pack 1.

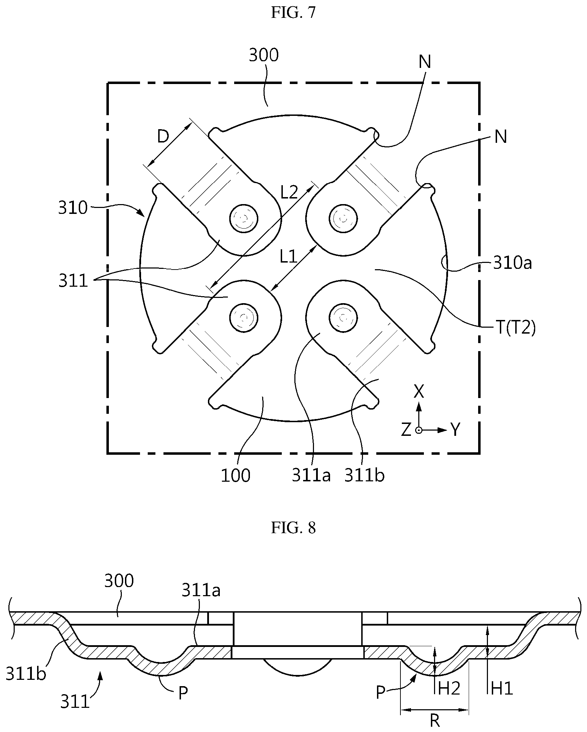

Referring to FIGS. 7 and 8, in order to harmoniously satisfy the damping effect and the resistance reduction effect for vibration and/or external impact, and the smoothness of venting gas discharge, it is necessary to numerically satisfy certain conditions.

For example, when the battery cell 100 applied to the present disclosure is a 21700 cylindrical battery cell, the distance L1 between the ends of the fastening legs 311 facing each other preferably satisfies the range of about 2.5 mm to 3.5 mm. In addition, the distance L2 between the central portions of the coupling areas of the fastening legs 311 facing each other preferably satisfies the range of about 4.5 mm to 6.5 mm. In addition, the width D of the fastening leg 311 preferably satisfies the range of about 3 mm to 4 mm. In addition, the distance H1 between the lower surface of the body of the bus bar 300 and the lower surface of the contact portion 311b preferably satisfies the range of about 0.5 mm to 0.8 mm. In addition, when the contact portion 311b includes the contact protrusion P, the height H2 of the contact protrusion P preferably satisfies the range of about 0.3 mm to 0.4 mm, and the width R preferably satisfies the range of about 1.2 mm to 1.6 mm.

In the case where the central portion of the terminal fastening unit 310 approximately coincides with the central portion of the electrode terminal T, if the numerical ranges as described above are satisfied, weldability between the bus bar 300 and the electrode terminal T may be ensured, excessive increase in resistance may be prevented, and the smoothness of venting gas discharge may be secured.

However, these conditions are preferable conditions when the battery cell 100 applied to the battery pack 1 of the present disclosure is a 21700 cylindrical battery cell. The 21700 cylindrical battery cell is a cylindrical battery cell with the specification having a diameter of about 21 mm and a height of about 70 mm. Therefore, the present disclosure is not limited to these numerical ranges, and when the specification of the battery cell 100 applied to the present disclosure is different from that of the 21700 cylindrical battery cell, the numerical ranges as described above may also be different.

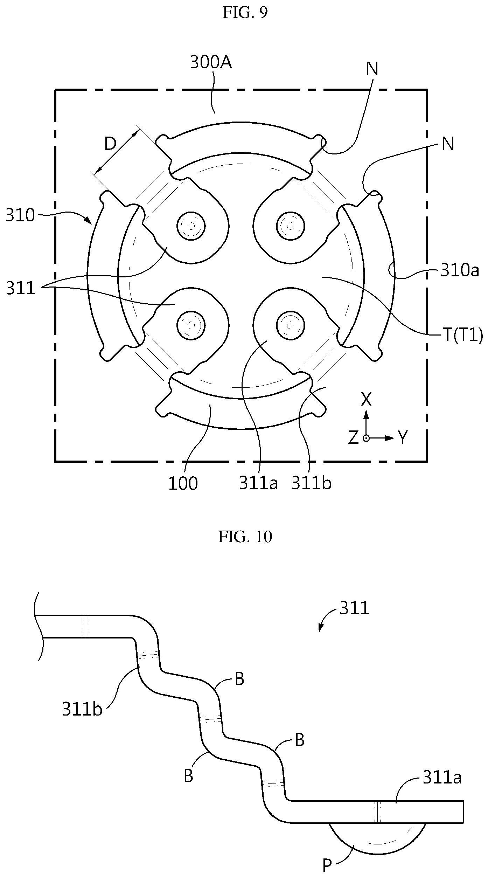

Next, a structure of the bus bar 300 according to another embodiment of the present disclosure will be described with reference to FIGS. 9 and 10. FIG. 9 is a partial enlarged view showing the coupling area of the bus bar and the first electrode terminal of the battery cell according to another embodiment of the present disclosure, and FIG. 10 is a view showing the shape of a fastening leg provided in the bus bar according to another embodiment of the present disclosure.

Referring to FIGS. 9 and 10, the bus bar 300A according to another embodiment of the present disclosure is different from the bus bar 300 according to the previously described embodiment in the point that the width D of the fastening leg 311 is reduced in some areas and/or that some area of the fastening leg 311 have a shape that can be deformed in length. However, since the bus bar 300A according to another embodiment of the present disclosure is substantially the same as the bus bar 300 according to the previous embodiment in terms of its structure and function, except for the above-described differences, the remaining matters except for the two differences as described above, the description will be omitted.

First, referring to FIG. 9, a partial area of the fastening leg 311 of the bus bar 300A may have a reduced width compared to the remaining area. For example, the fastening leg 311 may be configured such that at least a part of the connection portion 311b has a reduced width compared to the width D of the remaining area. In particular, the connection portion 311b may be configured such that at least a part of the area inclined toward the electrode terminal T of the battery cell 100 has a reduced width compared to the width D of the remaining area.

In this case, the fastening leg 311 may function not only as an electrical connection part between the electrode terminal T of the battery cell 100 and the body of the bus bar 300A, but also as a fuse that can block the current when an overcurrent occurs due to a short circuit or the like. On the other hand, even if a part of the fastening leg 311 has such a reduced width, it is possible to suppress an increase in resistance by providing a plurality of fastening legs 311.

Next, referring to FIG. 10 together with FIG. 9, the fastening leg 311 of the bus bar 300A may include a length variable region having at least one bending portion B in which the extending direction is changed. The fastening leg 311 has a shape extending from the body of the bus bar 300A in the direction toward the electrode terminal T of the battery cell 100, and may include an area in which the extending direction is not maintained in a certain direction and the extending direction is changed. Accordingly, the fastening leg 311 may have a shape in which mountains and valleys are repeated without being flat in some area. The length variable region may have, for example, a shape and function similar to those of a bellows or a spring capable of length deformation within a certain range.

For example, the fastening leg 311 may be configured such that at least a part of the connection portion 311b has a length variable region as described above. In particular, the connection portion 311b may be configured such that at least a part of the area inclined toward the electrode terminal T of the battery cell 100 has a length variable region as described above.

Although relative movement between the bus bar 300A and the battery cell 100 is generated due to vibration and/or impact applied to the battery pack 1, it is possible to prevent a force from being applied to the coupling area of the electrode terminal T and the fastening leg 311 through the length deformation of the length variable region.

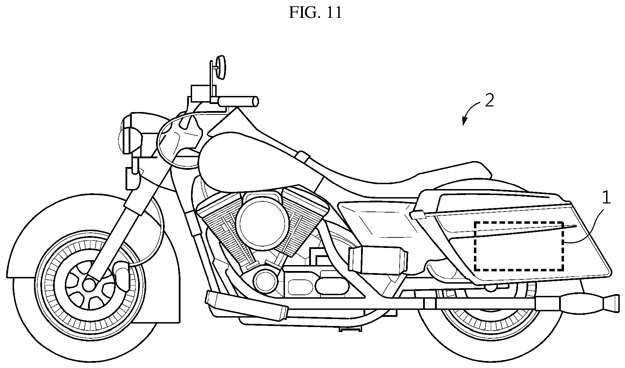

Next, an electric two-wheeled vehicle 2 according to an embodiment of the present disclosure will be described with reference to FIG. 11. FIG. 11 is a diagram showing an electric two-wheeled vehicle according to an embodiment of the present disclosure.

Referring to FIG. 11, an electric two-wheeled vehicle 2 according to an embodiment of the present disclosure includes the battery pack 1 of the present disclosure as described above. The electric two-wheeled vehicle 2 operates by being powered by the battery pack 1 of the present disclosure. The electric two-wheeled vehicle 2 may be a two-wheeled vehicle that operates solely by electric power supplied from the battery pack 1, or may be a hybrid two-wheeled vehicle that operates by the supplied electric power and other energy sources such as fuel. The electric two-wheeled vehicle 2 includes, for example, an electric scooter, an electric bicycle, and the like.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### [Reference Signs]

1: battery pack
2: electric two-wheeled vehicle
100: cylindrical battery cell
T1: first electrode terminal
T2: second electrode terminal
200: pack housing
200a: opening
210: first housing
220: second housing
300, 300A: bus bar
310: terminal fastening unit
310a: bus bar hole
N: notching portion
311: fastening leg
311a: contact portion
311b: connection portion
P: contact protrusion
B: bending portion
320: fixing portion

## Claims

1. A bus bar (300), which is provided to at least one side of a pack housing to electrically connect a plurality of battery cells accommodated in the pack housing,
wherein the bus bar comprises a terminal fastening unit (310) that has a shape bent toward an electrode terminal (T) of the battery cell from a circumference of a bus bar hole formed in the bus bar and includes at least one fastening leg coupled to the electrode terminal,
**characterized in that** the terminal fastening unit has a pair of notching portions (N) formed to be concave toward an inner side of the bus bar hole at both sides of the fastening leg,
and **in that** the fastening leg includes length variable regions having bending portions (B) in which the extending direction is changed.

2. A battery pack (1), comprising
a plurality of battery cells (100); a pack housing (200) configured to accommodate the plurality of battery cells; and a bus bar (300) according to claim 1 having the terminal fastening unit (310) coupled to an electrode terminal (T) of each of the plurality of battery cells and provided to at least one side of the pack housing,

3. The battery pack according to claim 2, wherein the battery cell is a cylindrical battery cell.

4. The battery pack according to claim 2, wherein the pack housing has an opening (200a) formed at a location corresponding to the electrode terminal.

5. The battery pack according to claim 4, wherein the terminal fastening unit is provided at a location corresponding to the opening.

6. The battery pack according to claim 2, wherein four fastening legs are provided, and
wherein the four fastening legs are arranged to be spaced apart by the same distance from each other along the circumference of the bus bar hole.

7. The battery pack according to claim 6, wherein the four fastening legs have the same shape and size.

8. The battery pack according to claim 6, wherein the bus bar hole has a circular planar shape.

9. The battery pack according to claim 2, wherein the fastening leg includes:
a contact portion (311a) coupled to the electrode terminal; and
a connection portion (311b) configured to extend from the circumference of the bus bar hole and connected to the contact portion.

10. The battery pack according to claim 9, wherein the contact portion has at least one contact protrusion (P) formed on a surface facing the electrode terminal.

11. The battery pack according to claim 9, wherein at least a part of the connection portion has a shape inclined upward or downward toward the electrode terminal.

12. The battery pack according to claim 2, wherein a partial area of the fastening leg has a reduced width compared to the surrounding area.

13. An electric two-wheeled vehicle (2), comprising the battery pack according to any one of claims 2 to 12.

## Patentansprüche

1. Sammelschiene (300), welche an wenigstens einer Seite eines Packgehäuses bereitgestellt ist, um eine Mehrzahl von Batteriezellen elektrisch zu verbinden, welche in dem Packgehäuse aufgenommen sind,
wobei die Sammelschiene eine Anschlussbefestigungseinheit (310) umfasst, welche eine Form aufweist, welche von einem Umfang eines Sammelschienenlochs, welches in der Sammelschiene gebildet ist, in Richtung eines Elektrodenanschlusses (T) der Batteriezelle gebogen ist, und welche wenigstens ein Befestigungsbein umfasst, welches mit dem Elektrodenanschluss gekoppelt ist,
**dadurch gekennzeichnet, dass** die Anschlussbefestigungseinheit ein Paar von Kerbabschnitten (N) aufweist, welche gebildet sind, um an beiden Seiten des Befestigungsbeins in Richtung einer Innenseite des Sammelschienenlochs konkav zu sein,
und dass das Befestigungsbein längenvariable Bereiche umfasst, welche Biegeabschnitte (B) aufweisen, bei welchen die Erstreckungsrichtung verändert ist.

2. Batteriepack (1), umfassend:
eine Mehrzahl von Batteriezellen (100); ein Packgehäuse (200), welches dazu eingerichtet ist, die Mehrzahl von Batteriezellen aufzunehmen; und eine Sammelschiene (300) nach Anspruch 1, welche die Anschlussbefestigungseinheit (310) mit einem Elektrodenanschluss (T) jeder aus der Mehrzahl von Batteriezellen gekoppelt aufweist und welche an wenigstens einer Seite des Packgehäuses bereitgestellt ist.

3. Batteriepack nach Anspruch 2, wobei die Batteriezelle eine zylindrische Batteriezelle ist.

4. Batteriepack nach Anspruch 2, wobei das Packgehäuse eine Öffnung (200a) aufweist, welche an einer Stelle gebildet ist, welche dem Elektrodenanschluss entspricht.

5. Batteriepack nach Anspruch 4, wobei die Anschlussbefestigungseinheit an einer Stelle bereitgestellt ist, welche der Öffnung entspricht.

6. Batteriepack nach Anspruch 2, wobei vier Befestigungsbeine bereitgestellt sind, und
wobei die vier Befestigungsbeine dazu angeordnet sind, um entlang des Umfangs des Sammelschienenlochs um den gleichen Abstand voneinander beabstandet zu sein.

7. Batteriepack nach Anspruch 6, wobei die vier Befestigungsbeine die gleiche Form und Größe aufweisen.

8. Batteriepack nach Anspruch 6, wobei das Sammelschienenloch eine kreisförmige planare Form aufweist.

9. Batteriepack nach Anspruch 2, wobei das Befestigungsbein umfasst:
einen Kontaktabschnitt (311a), welcher mit dem Elektrodenanschluss gekoppelt ist; und
einen Verbindungsabschnitt (311b), welcher dazu eingerichtet ist, sich von dem Umfang des Sammelschienenlochs zu erstrecken, und welcher mit dem Kontaktabschnitt verbunden ist.

10. Batteriepack nach Anspruch 9, wobei der Kontaktabschnitt wenigstens einen Kontaktvorsprung (P) aufweist, welcher an einer Fläche gebildet ist, welche dem Elektrodenanschluss zugewandt ist.

11. Batteriepack nach Anspruch 9, wobei wenigstens ein Teil des Verbindungsabschnitts eine Form aufweist, welche in Richtung des Elektrodenanschlusses nach oben oder nach unten geneigt ist.

12. Batteriepack nach Anspruch 2, wobei ein Teilbereich des Befestigungsbeins im Vergleich zu dem umgebenden Bereich eine reduzierte Breite aufweist.

13. Elektrisches zweirädriges Fahrzeug (2), umfassend den Batteriepack nach einem der Ansprüche 2 bis 12.

## Revendications

1. Barre omnibus (300), qui est fournie sur au moins un côté d'un boîtier de bloc pour connecter électriquement une pluralité d'éléments de batterie reçus dans le boîtier de bloc,
dans laquelle la barre omnibus comprend une unité de fixation de borne (310) qui a une forme courbée vers une borne d'électrode (T) de l'élément de batterie à partir d'une circonférence d'un trou de barre omnibus formé dans la barre omnibus et comprend au moins une patte de fixation couplée à la borne d'électrode,
**caractérisée en ce que** l'unité de fixation de borne a une paire de portions d'encochage (N) formées pour être concaves vers un côté intérieur du trou de barre omnibus au niveau des deux côtés de la patte de fixation,
et **en ce que** la patte de fixation comprend des régions de longueur variable ayant des portions de courbure (B) dans lesquelles la direction d'extension est modifiée.

2. Bloc-batterie (1), comprenant
une pluralité d'éléments de batterie (100) ; un boîtier de bloc (200) configuré pour recevoir la pluralité d'éléments de batterie ; et une barre omnibus (300) selon la revendication 1 ayant l'unité de fixation de borne (310) couplée à une borne d'électrode (T) de chacun de la pluralité d'éléments de batterie et fournie sur au moins un côté du boîtier de bloc.

3. Bloc-batterie selon la revendication 2, dans lequel l'élément de batterie est un élément de batterie cylindrique.

4. Bloc-batterie selon la revendication 2, dans lequel le boîtier de bloc a une ouverture (200a) formée à un emplacement correspondant à la borne d'électrode.

5. Bloc-batterie selon la revendication 4, dans lequel l'unité de fixation de borne est fournie à un emplacement correspondant à l'ouverture.

6. Bloc-batterie selon la revendication 2, dans lequel quatre pattes de fixation sont fournies, et
dans lequel les quatre pattes de fixation sont agencées pour être espacées les unes des autres de la même distance le long de la circonférence du trou de barre omnibus.

7. Bloc-batterie selon la revendication 6, dans lequel les quatre pattes de fixation ont la même forme et la même taille.

8. Bloc-batterie selon la revendication 6, dans lequel le trou de barre omnibus a une forme plane circulaire.

9. Bloc-batterie selon la revendication 2, dans lequel la patte de fixation comprend :
une portion de contact (311a) couplée à la borne d'électrode ; et
une portion de connexion (311b) configurée pour s'étendre à partir de la circonférence du trou de barre omnibus et connectée à la portion de contact.

10. Bloc-batterie selon la revendication 9, dans lequel la portion de contact a au moins une saillie de contact (P) formée sur une surface faisant face à la borne d'électrode.

11. Bloc-batterie selon la revendication 9, dans lequel au moins une partie de la portion de connexion a une forme inclinée vers le haut ou vers le bas vers la borne d'électrode.

12. Bloc-batterie selon la revendication 2, dans lequel une zone partielle de la patte de fixation a une largeur réduite par rapport à la zone environnante.

13. Véhicule électrique à deux roues (2), comprenant le bloc-batterie selon l'une quelconque des revendications 2 à 12.
